# FASCICULE DE BREVET EUROPEEN

(11) **EP 2 739 367 B1**
(45) Date de publication et mention de la délivrance du brevet: **31.05.2017**
(21) Numéro de dépôt: 12758547.9
(22) Date de dépôt: 06.08.2012
(51) Int. Cl.: A63F 9/00, A63F 9/24, A63J 11/00, G09B 19/22, G09B 25/08, A63H 33/02

(54) **JEU DE LABYRINTHE ÉLECTRONIQUE INTERACTIF PRATIQUÉ SUR UNE AIRE DE JEU GRANDEUR NATURE**
INTERAKTIVES ELEKTRONISCHES LABYRINTHSPIEL, DAS AUF EINEM VON MENSCHEN BEGEHBAREN SPIELFELD AUSGEÜBT WIRD.
INTERACTIVE ELECTRONIC LABYRINTH GAME PLAYED ON A FULL-SCALE PLAY AREA

(30) Priorité: 05.08.2011 FR 1102468
(43) Date de publication de la demande: 11.06.2014
(73) Titulaire: Trouvilliez, Bernard, 45600 Viglain (FR)
(72) Inventeur: Trouvilliez, Bernard, 45600 Viglain (FR)
(74) Mandataire: Gaillarde, Frédéric F. Ch.
(86) Numéro de dépôt international: PCT/FR2012/051853
(87) Numéro de publication internationale: WO 2013/021131

(56) Documents cités:
- WO-A1-2005/094109
- JP-A- 7 116 345
- US-A1- 2010 099 476

## Description

L'invention concerne un jeu de labyrinthe électronique interactif pratiqué sur une aire de jeu grandeur nature.

Le grand public porte un vif intérêt au jeu de labyrinthe dans la nature ou en intérieur. On peut remarquer tout particulièrement le jeu de labyrinthe réalisé au moyen de chemins pratiqués dans des champs de maïs. Cette technique nécessite une préparation coûteuse et contraint à une pratique en un lieu donné. Des inventeurs ont divulgué des structures gonflages ou modulaires qui permettent de constituer un labyrinthe mobile. Déambuler dans un labyrinthe conventionnel permet de relever des défauts notoires. Quand peu de personnes sont présentes dans le labyrinthe la sensation d'être perdu est ressentie par le joueur mais quand un public plus important est présent dans le labyrinthe les joueurs ont tendance à se suivre instinctivement ; dans ce cas, seul le premier joueur du groupe ressent la sensation recherchée. Un labyrinthe simpliste ou de petite taille est rapidement appréhendé par les joueurs et dans cette hypothèse le jeu perd son intérêt.

On connaît de US 2010/099476 un système de labyrinthe électronique comprenant une aire de jeux à l'entrée de laquelle le dispositif mobile est attribué à chaque joueur.

Un tel jeu de labyrinthe électronique permet de s'affranchir d'un certain nombre des inconvénients susmentionnés.

La présente invention vise à fournir un jeu de labyrinthe électronique grandeur nature à infrastructure plus légère et à moindre coût que ceux de la technique antérieure.

L'invention permet de résoudre ces problèmes en offrant la possibilité de réaliser un jeu de labyrinthe mobile à infrastructure très légère tout en procurant à chaque joueur la sensation de découverte de son chemin. Le labyrinthe selon l'invention bien que matérialisé par des chemins sur l'aire de jeu, procure un intérêt soutenu grâce à un parcours individuel pour chaque joueur, un niveau de difficulté et une longueur du chemin paramétrables, une gestion de la durée du parcours ainsi que la possibilité d'inclure des questions ou énigmes à résoudre. L'invention s'adresse à un large public en tout lieu tant en extérieur qu'en intérieur.

L'invention permet de répondre au besoin par tout ou partie de ses caractéristiques spécifiques. Dans cet esprit l'invention concerne un labyrinthe tracé sur une aire de jeu dont les cheminements comportent des intersections. Des bornes électroniques sont disposées à chaque intersection et parfois en travers d'un chemin. Les joueurs transportent durant toute la partie un dispositif électronique mobile qui interagit avec une borne dès que le joueur est à proximité immédiate de celle-ci.

L'aspect des bornes et des dispositifs mobiles est déterminé en fonction du thème du jeu.

Les principes de l'invention sont les suivants :
Des bornes électroniques sont disposées de manière non dissimulée et ostensiblement visibles à chaque intersection des chemins du labyrinthe ou en travers de ceux-ci. Le dispositif mobile qui est confié à chaque joueur en début de partie détecte et identifie toute borne à proximité immédiate du joueur.

Les bornes sont disposées de manière à ce qu'une seule borne à la fois puisse être détectée, cette condition est aussi assurée par des moyens électroniques spécifiques du dispositif mobile.

Selon le thème du jeu, le joueur peut soit porter le dispositif électronique mobile sur lui, soit le transporter dans ses bras ou de toute autre manière comme par exemple le faire rouler.

Le joueur se déplace sur l'aire de jeu en cheminant librement mais saura s'il a effectué les bons choix à chaque fois qu'il s'approchera d'une borne. En fonction d'un signal sonore, d'un message ou d'une vibration émise par le dispositif mobile, le joueur pourra soit continuer, faire demi-tour en cas d'erreur ou modifier son chemin. Par ce moyen simple le joueur se déplace dans un labyrinthe virtuel dans un environnement réel. Un labyrinthe classique comporte des murs ou des cloisons pour éviter que la sortie du labyrinthe et le chemin emprunté par les autres joueurs soient découverts immédiatement. Dans le labyrinthe selon l'invention, le joueur peut voir la sortie et les évolutions des autres joueurs sans inconvénients, en effet, chaque joueur poursuit un parcours personnel virtuel enregistré dans la mémoire du dispositif mobile.

Le joueur ne gagne que lorsqu'il a effectué un passage par toutes les bornes balisant le bon chemin dans l'ordre prédéterminé et dans le délai imparti.

Pour augmenter l'intérêt du jeu, les bornes sont généralement identifiées visuellement par des représentations graphiques ou des volumes. Il peut s'agir de signes, de graphismes, de photos en fonction du thème du jeu. Le joueur peut trouver le bon chemin soit par hasard, soit en répondant à un questionnaire. Une réponse exacte à ce questionnaire procure les données nécessaires pour connaître, via une clef de transcodage fournie en début de partie, la représentation graphique ou le volume de la borne correspondant à la prochaine étape du bon chemin.

Quand le joueur ne dispose pas, durant son parcours, d'un questionnaire écrit, le dispositif mobile est équipé d'un circuit électronique de synthèse sonore qui lui diffuse les questions, les messages et les bruitages.

Selon un principe de détection, les bornes émettent un code qui leur est propre et qui est capté et identifié par le dispositif mobile.

L'illusion de l'effet labyrinthe est provoquée par le fait que chaque joueur ignore le bon chemin ainsi que les bornes qui représentent les étapes de ce chemin, que le chemin est différent pour chaque joueur au cours d'une partie et que les chemins à emprunter sont différents à chaque partie.

A cet effet, les codes correspondants aux bornes balisant divers chemins possibles ont été enregistrés dans la mémoire du dispositif mobile. En début de partie, un chemin a été sélectionné par le gestionnaire du jeu ; il s'agit de la liste des numéros des codes des bornes balisant le chemin à parcourir au cours d'une partie et du temps maximum accordé pour y parvenir.

Le microcontrôleur du dispositif mobile déclenche un signal sonore, un message ou une vibration qui avertit le joueur qu'il est sur le bon chemin quand le numéro de code capté par le dispositif mobile correspond de manière successive et étape par étape à la liste des numéros de code. Ceci se traduit sur l'aire de jeu par un parcours sélectionné par le gestionnaire du jeu. Dans la mesure où le gestionnaire du jeu a sélectionné, par les moyens électroniques appropriés dans la mémoire du dispositif mobile, un parcours différent pour chaque joueur, ceux ci peuvent effectuer leur partie sans s'influencer mutuellement.

Une caractéristique spécifique à l'invention consiste en ce que sur une aire de jeu de taille limitée et avec un nombre de bornes en quantité limitée, la longueur du chemin est limitée uniquement par la taille de la mémoire du dispositif mobile. En effet la programmation peut permettre au joueur de passer plusieurs fois par la même borne à diverses étapes du chemin.

Les bornes sont pourvues d'un microcontrôleur produisant un signal logique de plusieurs bits qui correspondent au code qui est propre à chaque borne. Ce signal logique module une porteuse selon l'une des techniques connues de modulation ou en synthèse directe. Un circuit accordé composé de la bobine d'émission du champ électromagnétique et d'une capacité produit un champ de courte portée qui peut être capté par le dispositif mobile à proximité immédiate de la borne. La borne est généralement alimentée par une batterie éventuellement maintenue en charge par une photopile. Un limiteur de la puissance d'émission permet de diminuer la surface de l'aire de jeu ou une utilisation en intérieur sans interférences.

En cas d'installation fixe ou en intérieur, la batterie est remplacée par une alimentation basse tension commune à toutes les bornes.

Un dispositif mobile est confié à chaque joueur. Le dispositif mobile capte le champ électromagnétique codé émis par les bornes grâce à son circuit accordé sur la même fréquence que celle des émetteurs de bornes. Ce circuit accordé et un logiciel d'analyse de trame numérique programmé dans le microcontrôleur du dispositif mobile assurent un filtrage puissant des signaux captés.

En début de partie l'exploitant a sélectionné dans la mémoire du dispositif mobile une liste de codes des bornes qui constitue le parcours à effectuer ainsi qu'une durée de partie. Cette sélection s'effectue grâce à une liaison numérique série qui permet la connexion d'un micro-ordinateur équipé d'un logiciel de gestion des parties. Par ces moyens l'exploitant peut paramétrer le dispositif mobile en début de partie et de collecter la progression du joueur dans le labyrinthe dans la mémoire du dispositif mobile en fin de partie.

Le logiciel de gestion des parties permet d'adapter la difficulté et la longueur du labyrinthe en fonction de l'âge du joueur simplement en sélectionnant une liste d'étapes plus ou moins difficiles et plus ou moins longues. Le logiciel de gestion des parties comprend un compteur de temps pour chaque dispositif mobile sur l'aire de jeu. Ce compteur est mis à zéro puis synchronisé avec l'horloge du dispositif mobile au moment de la remise au joueur du dispositif mobile. L'ensemble de ces compteurs sont visibles à l'écran de l'ordinateur de gestion des parties ; par ce moyen l'exploitant a sous les yeux l'ensemble de l'évolution temporelle de tous les joueurs présents sur l'aire de jeu.

Durant le cheminement du joueur le microcontrôleur du dispositif mobile analyse en permanence les signaux reçus. Quand le code reçu de la borne située à proximité du joueur est identique au premier code de la liste correspondant au parcours choisi par l'exploitant le microcontrôleur déclenche une vibration, un message ou un signal sonore. La première étape du parcours étant trouvée, le compteur d'étapes inclus dans le microcontrôleur pointe sur le second élément de la liste et ne déclenchera un signal une vibration ou un message annonçant au joueur qu'il est sur le bon chemin qu'en cas de concordance entre le code du second élément de la liste et le code reçu de la borne située à proximité du joueur. Ce processus se reproduit d'étape en étape en conséquence le joueur est contraint d'effectuer le parcours présélectionné par l'exploitant. Le circuit électronique dispositif mobile dispose d'une horloge temps réel synchronisable qui par interruption limite le temps disponible pour effectuer l'ensemble du parcours à la durée programmée par l'exploitant. Durant la partie le dispositif mobile enregistre en mémoire les codes des bornes approchées par le joueur.

Le dispositif mobile en fonction du thème du jeu peut avoir des formes et des fonctions précises, à cet effet il comprend un détecteur de changement de position qui peut être en fonction du thème, un détecteur à bille, un clinomètre, ou un accéléromètre adapté pour détecter les changements de positions ou les chocs reçus par le dispositif mobile ; ce détecteur connecté au microcontrôleur est pourvu d'un logiciel qui isole les détections parasites et provoque en fonction du thème et de la règle du jeu un avertissement, des pénalités ou une interruption de la partie.

Par sécurité le dispositif mobile comprend un circuit apte à recevoir la porteuse d'un émetteur haute fréquence situé au centre de l'aire de jeu. Le niveau du signal reçu est détecté puis intégré par des moyens adaptés. Un détecteur de seuil du signal reçu permet d'évaluer si le joueur est sorti de l'aire de jeu. Si ce seuil est dépassé l'électronique du dispositif mobile avertit par un signal sonore le joueur qu'il est sorti de l'aire de jeu puis si le signal reste au-dessus du seuil à l'issue d'une temporisation prédéterminée, le circuit électronique du dispositif mobile interrompt la partie. Cette alarme n'est pas utile en configuration intérieure du jeu.

Selon d'autres variantes de réalisation moins performantes mais parfois mieux adaptées à un thème de jeu particulier, chaque borne et chacun des dispositifs mobiles sont des émetteurs et des récepteurs basse fréquence, haute fréquence, ultrasonores ou infrarouges.

Selon le thème du jeu les bornes et les dispositifs mobiles peuvent prendre respectivement des formes très diverses par exemple : des mégalithes et météorites pour un thème préhistorique, des runes et la pierre philosophale pour le moyen âge, des blasons de ville et une roue pour les courses cyclistes, logos des clubs et des stades et un ballon pour le football, des gravures d'îles et un compas pour le thème corsaires.

Selon un thème du jeu évolué les bornes symbolisent chacune une ville particulière par un moyen évocateur tel que panneau d'entrée, blason, monument, spécialité locale et les dispositifs mobiles ont la forme d'une roue de vélo. Le circuit électronique inclus dans le moyeu de la roue comprend un accéléromètre qui détecte le rythme de rotation de la roue ainsi que toute chute.

Le logiciel du micro contrôleur du dispositif mobile analyse le rythme des signaux issus de l'accéléromètre, les compare avec des gabarits de tolérances pour pénaliser tout joueur qui ne fait pas rouler la roue ou la fait tomber. Les chemins sont agrémentés de difficultés telles que des montées, des descentes, des imitations de pavés ; les gabarits de tolérances prennent en compte, en fonction des étapes, ces difficultés et pénalisent les joueurs qui tentent de les contourner.

La difficulté peut être augmentée en contraignant le joueur à utiliser une baguette pour faire rouler la roue en frottant, vers l'avant, par à-coups sur le dessus de la roue. Ce mouvement produit des impulsions caractéristiques qui sont détectées par l'accéléromètre et que le logiciel du microcontrôleur du dispositif mobile identifie par analyse. Toute absence de ces impulsions signifie que le joueur n'utilise pas la baguette pour faire avancer la roue et de ce fait perd la partie.

Selon une version utilisable en intérieur dans une salle plongée dans le noir ou en lumière atténuée spécifique par exemple la lumière noire, chacune des bornes est équipée d'au moins une sortie numérique de puissance connectée à un projecteur de forme ou d'image fixe. Chaque projecteur, placé en l'air sur une structure, projette au sol une forme lumineuse qui constitue une cellule du labyrinthe. Ces cellules sont matérialisées dans l'espace grâce à la production d'un léger brouillard. Chacune des bornes et chacun des dispositifs mobiles sont équipés d'une liaison infrarouge numérique qui leur permet de communiquer entre eux. Par ces moyens le joueur peut évoluer en tenant le dispositif mobile dans ses mains tendues de cellule en cellule, une cellule s'éclaire automatiquement quand le joueur est présent à l'intérieur. Si le joueur a emprunté un mauvais chemin, le programme du dispositif mobile permet l'éclairage d'un certain nombre de cellules pour le laisser dans l'errance puis ne déclenche pas l'éclairage de la dernière cellule du parcours sans issue. Le joueur ne peut que rebrousser chemin pour retrouver l'intersection ou le mauvais choix qui a été effectué. Selon une option plus performante le projecteur de formes est remplacé par au moins quatre rampes composées de diodes LED ou de lasers. Ces rampes sont connectées à des sorties numériques de puissance de chacune des bornes. Ces rampes disposées par exemple en carré créent dans l'espace un volume. Par programme la rampe sous laquelle passe le joueur s'éteint quand le joueur passe d'une cellule à l'autre. Ces dispositions permettent au joueur de connaître des sensations assimilables à celles connues autrefois dans une attraction foraine nommée palais des glaces.

L'invention sera mieux comprise et les avantages de celle-ci apparaîtront plus clairement à la lumière des descriptions qui vont suivre de réalisations conformes à ses principes et à la définition qui précède, données uniquement à titre d'exemple, et faites en référence aux dessins annexés dans lesquels :
- La figure 1 est une représentation de l'aire de jeu et un joueur au départ. Le thème du jeu représenté est un labyrinthe de mégalithes
- La figure 2 représente un exemple de tracé des chemins d'un labyrinthe sur l'aire de jeu vue de dessus.
- La figure 3 représente un schéma de principe du circuit électronique de l'une des bornes dénommée mégalithe dans cet exemple
- La figure 4 représente un schéma de principe du circuit électronique du dispositif mobile dénommé météorite dans cet exemple.
- La figure 5 est une représentation de l'aire de jeu et un
   joueur au départ. Le thème du jeu représenté est un labyrinthe de routes et étapes de course cycliste.
- La figure 6 est une représentation d'une clef de transcodage fournie au joueur au départ du jeu.

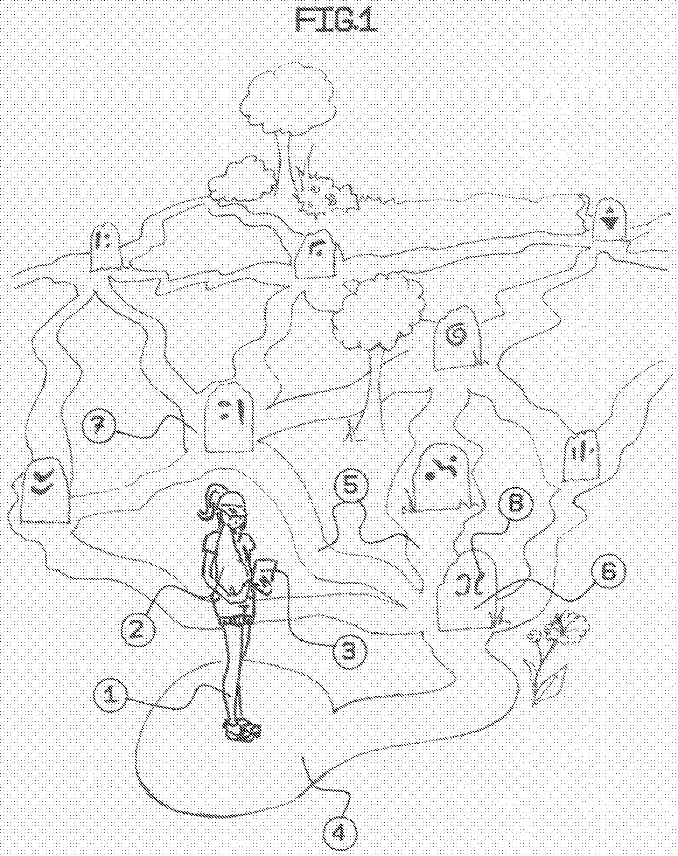

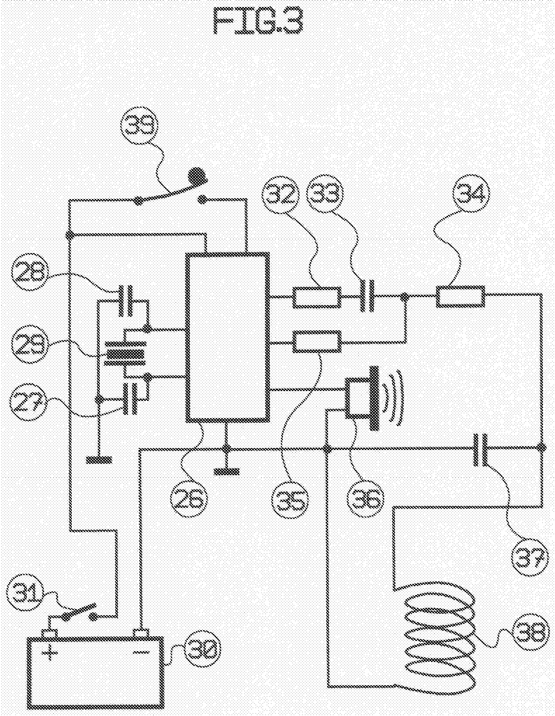

En se reportant à la figure 1, on a représenté un joueur (1) transportant dans ses bras le dispositif mobile (2) qui prend dans cet exemple la forme d'une météorite. Au départ (4) le joueur prend connaissance du questionnaire (3). Des bornes qui prennent dans cet exemple la forme de mégalithes (6) sont disposées aux intersections (7) des chemins possibles (5) ou en travers de ceux-ci. Des signes (8) gravés sur les mégalithes permettent au joueur de les identifier. Le joueur empreinte les chemins qu'il choisit tout en présentant la météorite devant les mégalithes qu'il rencontre; cette action déclenche un signal sonore une vibration ou un message qui indiquent au joueur s'il est sur le bon chemin. Ce parcours peut être trouvé soit au hasard soit en répondant convenablement au questionnaire. Dans cet exemple une clef de transcodage (fig 3) permet d'identifier les mégalithes et par conséquent le chemin, en transposant la première lettre de la réponse aux questions en signe. Ces signes sont ceux gravés sur les mégalithes. De proche en proche le joueur effectue un parcours qui est enregistré par le circuit électronique de la météorite. Ce circuit gère aussi le temps total du parcours et des temps intermédiaires. Le joueur gagne s'il effectue le chemin prédéterminé dans le temps imparti mais le parcours peut comprendre, en fonction de son niveau de difficulté, des pièges virtuels ; ce sont des tronçons de chemin et par conséquent des mégalithes, par lesquelles il faut éviter de passer ; dès que le joueur est à proximité de ces mégalithes le circuit électronique de la météorite peut décompter du temps ou le contraindre à répondre à une question supplémentaire.

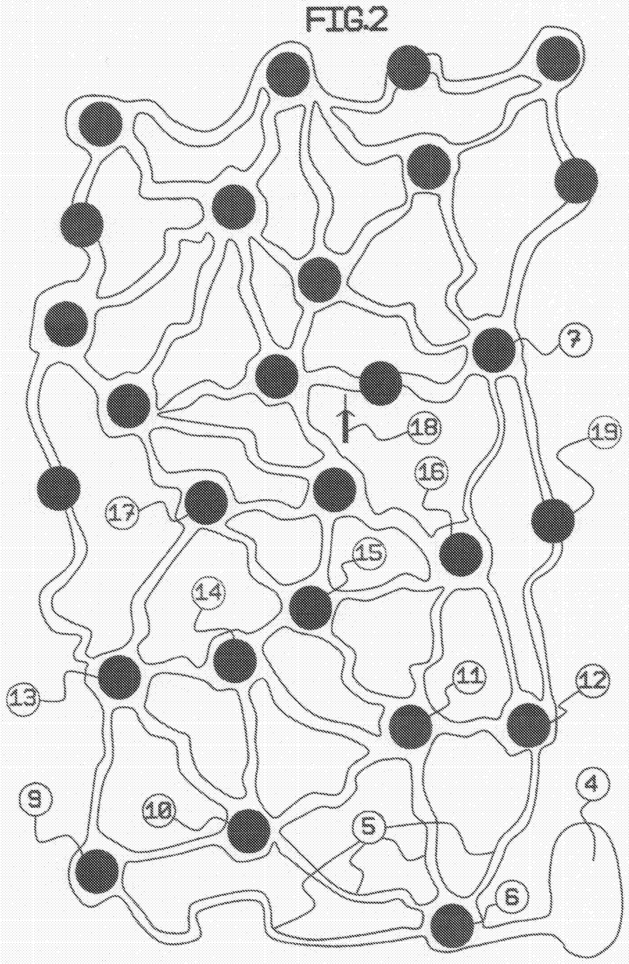

En se rapportant à la figure 2, on peut voir l'aire de jeu vue de dessus. Une aire départ (4) qui dans cet exemple permet au joueur de s'introduire sur l'aire de jeu. Les chemins possibles (5) du labyrinthe constituent à leur point de rencontre des intersections (7). Un mégalithe(6) est situé à chaque intersection. Le joueur qui débute le jeu va passer à proximité du mégalithe référence (6) ce qui dans un premier temps déclenchera via le circuit électronique de la météorite (2) obligatoirement un signal sonore, une vibration ou un message représentatifs du bon chemin. A ce stade le joueur va devoir choisir un des chemins possibles (5) qui eux-mêmes aboutissent aux intersections où sont situés les mégalithes (9), (10), (11), (12). Le joueur va progresser au hasard sur l'un des chemins possibles pour aboutir à l'un de ces mégalithes. Seul l'un d'entre eux va déclencher via le circuit électronique de la météorite un signal représentatif du bon chemin. On comprend que le joueur qui a emprunté un mauvais chemin sera contraint d'effectuer un demi-tour ou une déviation si le signal est représentatif d'un mauvais chemin.

En l'occurrence si le mégalithe (10) est sur le bon chemin et que le joueur s'est dirigé vers le mégalithe (12), il pourra que retourner vers le mégalithe (6) pour atteindre le mégalithe (10)

Eventuellement, par paramétrage, l'exploitant peut autoriser le joueur à passer par le mégalithe (11). De proche en proche le joueur effectue un parcours qui peut passer par exemple par les mégalithes (9, 13, 14, 11, 15, 16, 12, 11, 15, 17) et ainsi de suite.

On remarque que le joueur a effectué en sens inverse deux fois le parcours entre les mégalithes (11) et (15). Cette particularité procure la possibilité d'un parcours presque illimité; en effet, tant que le mégalithe de référence (6) ne fera pas partie une nouvelle fois du parcours le joueur ne sortira pas du labyrinthe. Le fait de passer plusieurs fois au même endroit et de ne plus pouvoir sortir contribue comme dans un labyrinthe classique à la sensation d'être perdu.

En se rapportant à la figure 3, on observe le schéma de principe du circuit électronique inclus dans chaque borne. La borne est constituée de matière amagnétique. On remarque sur le schéma une bobine (38). Cette bobine est parcourue par un courant alternatif ce qui a pour effet de créer un champ magnétique qui se développe en champ proche à proximité immédiate de la borne (mégalithe). Ce champ magnétique est modulé et codé par le circuit électronique connecté à la bobine (38) en conséquence la borne peut être repérée et identifiée à une distance inférieure à 1 mètre par un dispositif mobile (météorite) décrit ci-après.

L'oscillateur de l'horloge du micro-contrôleur (26) est piloté par un quartz (29) et deux capacités (28 et 27) pour assurer une bonne stabilité. Le micro-contrôleur (26) génère, après filtrage par les résistances (32) et (35) et de la capacité (33), un signal triangulaire modulé en amplitude et en fréquence.

Ce signal est présenté aux bornes du circuit accordé, composé de la capacité (37) et de la bobine (38). Dans cet exemple la fréquence centrale employée a une longueur d'onde kilométrique.

Le circuit comporte une sirène (36) branchée sur une sortie du micro contrôleur qui informe l'exploitant des chocs, tentatives de vol ou d'effraction qui sont détectés par le contact au choc (39). Ce contact au choc est connecté sur une entrée du microcontrôleur qui assure les temporisations nécessaires pour éviter les détections intempestives. Le microcontrôleur (26) code la modulation du son de la sirène (36) de manière différente pour chaque borne afin que l'exploitant puisse, à l'oreille, repérer sur l'aire de jeu la borne concernée. L'alimentation est assurée par la batterie (30) et la mise sous tension par l'interrupteur (31).

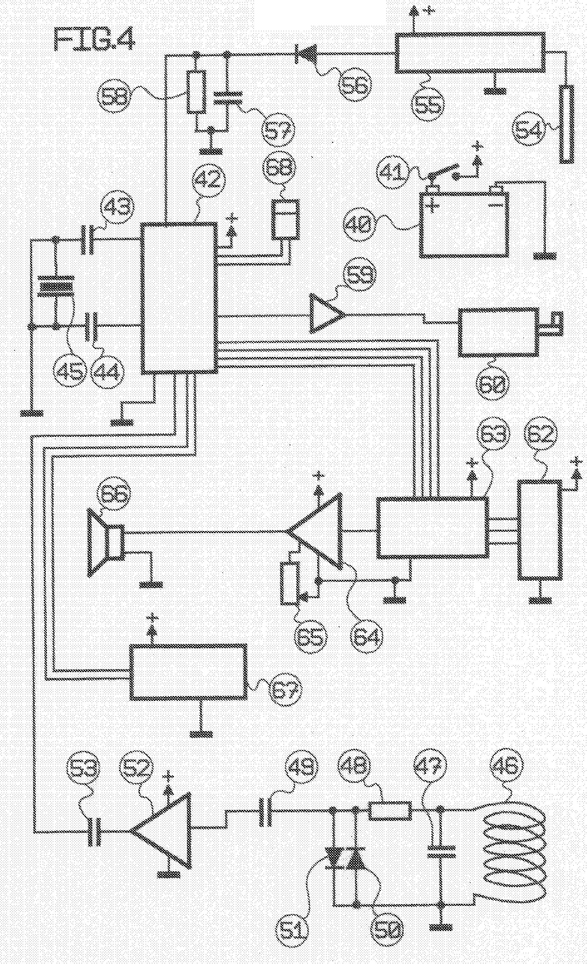

En se rapportant à la figure 4, on remarque la présence d'une bobine (46) incluse dans le dispositif mobile (météorite). Cette bobine a une double fonction elle est conçue pour recevoir le champ électromagnétique émis par les bornes (mégalithes) et elle est un des éléments du circuit accordé constitué avec le condensateur (47). La résistance (48) et les deux diodes tête bêche (50,51) constituent une limitation contre les surtensions. Le signal est présenté via la capacité (49) à un amplificateur linéaire (52). Le signal est présenté via la capacité (53) sur l'entrée analogique du microcontrôleur (42).

La démodulation FM et AM du signal est assurée grâce une analyse en temps réel du signal reçu par un logiciel approprié et la stabilité de l'horloge du microcontrôleur (42) qui est assurée par le quartz (45) et les capacités (44 et 43).

Quand le code reçu de la borne située à proximité du joueur est identique au premier code de la liste correspondant au bon chemin le microcontrôleur (42), via l'amplificateur (59) et le moteur (60), déclenche une vibration qui se répercute à tout le dispositif mobile (météorite).

La première étape du parcours étant trouvée, le compteur d'étapes inclus dans le microcontrôleur (79) pointe sur le second élément de la liste et ne déclenchera un signal une vibration ou un message annonçant au joueur qu'il est sur le bon parcours qu'en cas de concordance entre le code du second élément de la liste et le code reçu de la borne située à proximité du joueur. D'étape en étape, le joueur est contraint d'effectuer le parcours présélectionné par l'exploitant.

Si l'exploitant n'utilise pas de questionnaire écrit le microcontrôleur (42) est connecté à un circuit de synthèse sonore (63) comprenant une mémoire amovible (62). La sortie synthèse sonore est reliée à un amplificateur audio (64) dont le gain peut être réglé grâce un potentiomètre (65). Le haut-parleur (66) permet la diffusion des questionnaires et consignes de jeu. Dans cette hypothèse la vibration peut être accompagnée de sons par exemple galactiques.

Le joueur perdu peut avoir tendance à quitter l'aire de jeu.

Le circuit comporte une antenne patch (54) connectée à un circuit récepteur haute fréquence superhétérodyne conventionnel (55) qui reçoit une porteuse de la part d'un émetteur situé au milieu de l'aire de jeux (18). Le niveau du signal reçu est détecté par la diode (56) qui redresse le signal en provenance du récepteur (55). La capacité (57) et la résistance (58) forment une constante de temps qui évite les réactions du dispositif mobile aux variations de courte durée du niveau du signal. Ce signal continu variable est présenté à l'entrée du convertisseur analogique digital interne du microcontrôleur (42). Par logiciel le microcontrôleur déclenche un message ou un bruit quand le signal reçu diminue pendant plus de 30 secondes sous un seuil réglable considéré comme caractéristique de la sortie de l'aire de jeu. Ce signal avertit le joueur qu'il doit retourner sur ses pas.

Le microcontrôleur grâce à son quartz externe (45) et ses temporisateurs internes dispose d'une horloge temps réel précise. Par logiciel la fin de la partie est déclenchée par le microcontrôleur (42) et se manifeste sous la forme d'une vibration pulsée continue ou d'un message pour l'une des trois conditions suivantes:
- Le bon chemin a été parcouru intégralement dans le temps imparti, dans ce cas la partie est gagnée.
- La durée totale de la partie paramétrée par l'exploitant est dépassée, dans ce cas la partie est perdue.
- Le joueur se maintient hors de l'aire de jeu pendant plus de 3 minutes, dans ce cas la partie est perdue et immédiatement interrompue.

Le circuit du dispositif mobile comprend un détecteur de changement de position (67) verticale. Ce détecteur transmet un signal au micro contrôleur quant le dispositif mobile n'est plus maintenu globalement dans une position verticale. Ce détecteur est, selon les sensibilités nécessaires en fonction du thème du jeu, un détecteur à bille, un clinomètre, ou un accéléromètre. Ce détecteur peut aussi détecter certains chocs.

Dans cet exemple le détecteur a pour objectif de contraindre le joueur à manipuler la météorite avec précaution, en conséquence pour toute manipulation brutale le microcontrôleur (42) déclenche une forte vibration ou un signal sonore, puis si le problème persiste un arrêt prématuré de la partie.

La prise de communication série USB (68) permet la connexion d'un micro-ordinateur disposant d'un logiciel de gestion des parties. Ceci permet à l'exploitant de paramétrer le dispositif mobile en début de partie et de collecter, dans la mémoire du dispositif mobile, la progression du joueur dans le labyrinthe en fin de partie. Le logiciel de gestion des parties permet d'adapter la difficulté du labyrinthe en fonction de l'âge du joueur simplement en sélectionnant une liste d'étapes plus ou moins difficiles et plus ou moins longues. Le logiciel de gestion des parties comprend aussi un compteur de temps pour chaque dispositif mobile. Ce compteur est mis à zéro puis synchronisé avec l'horloge du dispositif mobile au moment du paramétrage et de la remise au joueur du dispositif mobile (météorite). Par ce moyen l'exploitant a sous les yeux l'ensemble de l'évolution temporelle de tous les joueurs présents sur l'aire de jeu et est en mesure d'intervenir pour contrarier tout abus éventuel.

La mise sous tension circuit est effectuée par un interrupteur (41); l'alimentation est assurée par batterie (40).

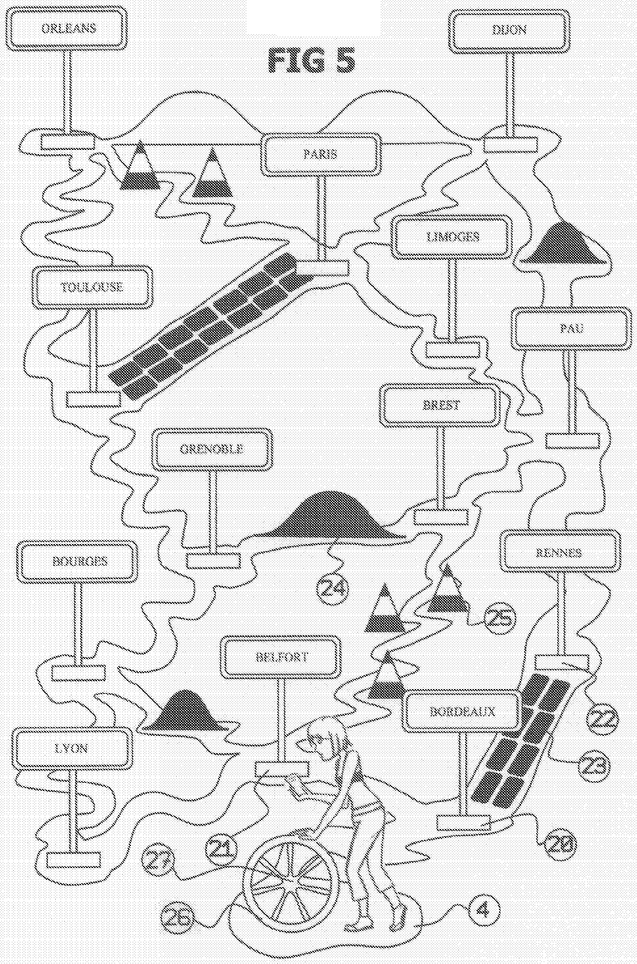

En se rapportant à la figure 5 on observe l'aire de jeu d'un second exemple de labyrinthe selon l'invention. Dans cet exemple dont le thème est la course cycliste, les bornes sont des panneaux de signalisation d'entrée de ville (20, 21, 22).

Le dispositif mobile prend la forme d'une roue de vélo (26). Le joueur sur l'aire de départ (4) va se déplacer sur les chemins tracés sur l'aire de jeu en faisant rouler la roue avec la main. Les chemins possibles sont agrémentés de difficultés qui peuvent être par exemple: Des imitations de passages pavés (23); ces passages en relief procurent une vibration dans la roue. Des passages qui comportent des petites montées (24). Des passages à plots ou rails de sécurité qui imposent un gymkhana (25). Le circuit électronique du dispositif mobile est inclus dans le moyeu de la roue (27). Le joueur doit évoluer sur les chemins possibles comme dans le premier exemple. Dans cet exemple le détecteur de position verticale (67) est un accéléromètre qui détecte toute chute de la roue. Dans cet exemple la chute, admise comme une maladresse, pénalise seulement le joueur en écourtant la durée de la partie. L'accéléromètre quatre axes et le microcontrôleur (42) contrôlent que la roue tourne et que les impulsions d'accélérations dans l'axe de la roue correspondent au rythme des relances à la main et non à un simple transport de la roue.

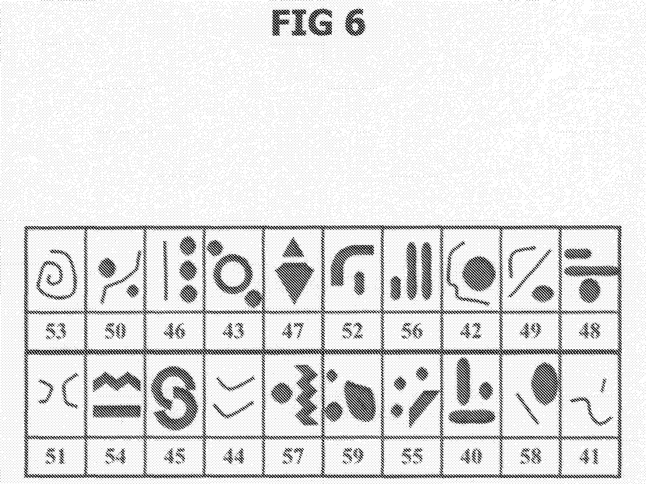

En se rapportant à la figure 6 on observe une grille qui comprend deux lignes de lettres, à chaque lettre correspond au dessus un signe. Chaque lettre est la première lettre de la réponse une question, le joueur peut par ce moyen connaître le signe gravé sur la borne qui correspond à sa prochaine étape.

Le labyrinthe électronique selon l'invention est destiné à être exploité sur les lieux de loisirs et touristiques, sites préhistoriques, grottes, châteaux, départs et arrivées de courses cyclistes, en tant qu'attraction foraine, en tant qu'outil de promotion publicitaire (labyrinthe de canettes géantes). Il peut être retransmis comme un jeu télévisé, ou servir de support à une émission de radio.

## Revendications

1. Système de labyrinthe électronique interactif comprenant :
- une aire de jeu formée de plusieurs chemins possibles à parcourir,
- un dispositif mobile(2) attribué à chaque joueur à l'entrée de l'aire de jeu,
**caractérisé en ce**
- **qu'**il comprend, en outre, des bornes émettrices (6) réparties sur l'aire de jeu, notamment à chaque intersection des chemins possibles(5)et que
- il comprend, en outre, un ordinateur de gestion des parties apte à présélectionner une liste de codes des bornes (6) qui constituent le parcours à effectuer,
- le dispositif mobile (2) est adapté pour détecter et identifier une borne (6) quand le joueur est à proximité à l'exclusion de tout autre borne (6) située sur l'aire de jeu et que,
- ce dispositif mobile (2) comprend, en outre, un microcontrôleur (42) et une liaison série pour attribuer à chaque joueur de manière différenciée dans la mémoire du microcontrôleur (42) une liste de codes des bornes qui constituent le parcours à effectuer par détections successives des bornes et que,
- pour vérifier que les joueurs déambulent le long du parcours à effectuer, la mémoire du microcontrôleur(42)comprend un compteur d'étapes qui contrôle l'évolution du joueur en s'incrémentant quand le code de la borne (6) est en concordance avec le code de la liste correspondant à l'étape atteinte par le joueur et que le microcontrôleur (42) comprend une horloge temps réel synchronisable avec celle de l'ordinateur de gestion des parties, qui limite le temps disponible pour effectuer le parcours à une durée programmée par un exploitant.

2. Système selon la revendications 1**caractérisé en ce que** l'ordinateur de gestion des parties est apte, par une liaison (68)établie avec le dispositif mobile (2), à présélectionner la liste des codes des bornes (6) qui constituent le parcours à effectuer, à télécharger la durée d'une partie et à synchroniser l'horloge temps réel du microcontrôleur (42) du dispositif mobile (2)avec un compteur de temps dédié à chaque joueur dans l'ordinateur de gestion des parties.

3. Système selon la revendication 1 **caractérisé en ce que** chaque borne (6) et chacun des dispositifs mobiles (2) sont équipés, respectivement, avec un émetteur et un récepteur magnétique, chacune des bornes (6) comprenant des moyens d'émission d'un signal électromagnétique codé (26, 29, 32, 35, 33, 34, 37, 38) et chaque dispositif mobile (2) de chaque joueur étant adapté pour capter exclusivement (46,47) le champ électromagnétique produit par une borne quand le joueur est situé à proximité immédiate de celle ci et pour analyser le dit signal pour indiquer si le joueur est sur le bon parcours dans le délai accordé.

4. Système selon la revendication 1 **caractérisé en ce que** chaque borne (6) et chacun des dispositifs mobiles (2) peuvent être équipés respectivement avec des émetteurs et des récepteurs basse fréquence, haute fréquence, ultrasonores, ou infrarouges.

5. Système selon les revendications 1 **caractérisé en ce qu'**il comprend un dispositif d'assistance sonore constitué d'un circuit de synthèse sonore (62), d'une mémoire (63), d'un amplificateur (64),d'un potentiomètre (65), d'un haut parleur (66) adapté pour au moins diffuser des messages et bruitages au joueur lui signalant qu'il est sur le bon ou le mauvais chemin.

6. Système selon la revendication 1, **caractérisé en ce que** chaque dispositif mobile (2) comprend un détecteur de changement de position (67) choisi dans le groupe parmi les détecteurs suivants ,en fonction du thème du jeu : un détecteur à bille, un clinomètre, ou un accéléromètre, adapté pour détecter les changements de positions ou les chocs reçus par le dispositif mobile (2) correspondant.

7. Système selon la revendication 1, **caractérisé en ce qu'**il comprend un émetteur(18) situé sur l'aire de jeu et chaque dispositif mobile (2) comprend un circuit détecteur intégrateur de porteuse (54, 66,56,57, 58) connecté à des moyens (42) adaptés pour détecter un seuil du signal reçu de l'émetteur (18) et pour avertir le joueur qu'il est hors de l'aire de jeu et des moyens pour interrompre la partie si le joueur reste hors de l'aire de jeu pendant une durée prédéterminée.

8. Système selon la revendication 6 **caractérisé en ce que** :
- les bornes (6) symbolisent chacune une ville particulière par un moyen évocateur tel que panneau d'entrée (20,21,22), blason, monument, spécialité locale et,
- les dispositifs mobiles ont la forme d'une roue de vélo (26) dont le circuit électronique inclus dans le moyeu de la roue (27) comprend un accéléromètre(67) qui détecte le rythme de rotation de la roue ainsi que toute chute et des moyens pour pénaliser tout joueur qui ne fait pas rouler la roue ou la fait tomber et,
- des chemins agrémentés de difficultés telles que des montées (24), des descentes, des imitations de pavés(23).

9. Système selon la revendication 8 **caractérisé en ce que** l'accéléromètre (67) et le logiciel du microcontrôleur(42) sont adaptés pour identifier si un joueur fait avancer la roue par analyse des impulsions caractéristiques de l'utilisation d'une baguette pour faire rouler la roue en frottant, vers l'avant, par à-coups sur le dessus de la roue, détectées par l'accéléromètre (67).

10. Système selon l'une des revendications de 1 à 7 **caractérisé en ce qu'**il comprend, en outre, des moyens adaptés pour réaliser des chemins virtuels lumineux, ces moyens comprenant :
- un projecteur de forme ou des rampes de diodes LED ou de lasers qui produisent des cellules lumineuses du labyrinthe au sol ou dans l'espace d'une pièce
- au moins une sortie numérique de puissance connectée au projecteur de forme ou aux rampes, équipant le microcontrôleur (26) de chacune des bornes (6)
- une liaison infrarouge équipant le microcontrôleur (26) de chacune des bornes (6) et le microcontrôleur (42) de chacun des dispositifs mobiles pour communiquer entre eux,
lesdits moyens et le microcontrôleur (42) de chacun des dispositifs mobiles (2) permettant de réaliser des chemins virtuels lumineux qui évoluent par allumage et extinction d'une ou plusieurs cellules avec le déplacement du joueur et en fonction du parcours enregistré dans la mémoire du microcontrôleur (42) de chacun des dispositifs mobiles (2).

11. Système selon l'une des revendications de 5 à 9 **caractérisé en ce qu'**il comprend des moyens pour connaître la borne qui correspond à la prochaine étape du parcours à effectuer, ces moyens comprenant :
- des signes (8) ou des volumes attribués à chacune des bornes (6),
- un questionnaire enregistré dans la mémoire du dispositif d'assistance sonore,
- une grille de transcodage fournie au joueur qui met en correspondance le signe ou le volume de la borne correspondant à la prochaine étape du parcours et une première lettre d'une réponse à une question du questionnaire.

## Patentansprüche

1. Interaktives, elektronisches Labyrinth-System, Folgendes umfassend:
- ein Spielfeld, das aus mehreren Wegen besteht, die abgeschritten werden können,
- eine mobile Vorrichtung (2), die an jeden Spieler am Eingang des Spielfelds vergeben wird,
**dadurch gekennzeichnet,**
- **dass** es darüber hinaus Sender-Wegmarkierungen (6) umfasst, die auf dem Spielfeld, vor allem an jeder Kreuzung der möglichen Wege (5) verteilt sind, und dass
- es darüber hinaus einen Computer zur Steuerung der Partien umfasst, der imstande ist, eine Liste mit Codes der Wegmarkierungen (6) vorzuwählen, welche die zu durchlaufende Strecke darstellen,
- die mobile Vorrichtung (2) ausgeführt ist, um eine Wegmarkierung (6) ausfindig zu machen und zu identifizieren, wenn der Spieler in der Nähe ist, unter Ausschluss aller anderen Wegmarkierungen (6), die sich auf dem Spielfeld befinden, und dass
- diese mobile Vorrichtung (2) darüber hinaus einen Mikrocontroller (42) und eine serielle Schnittstelle umfasst, um an jeden Spieler auf differenzierte Weise im Speicher des Mikrocontrollers (42) durch sukzessives Ausfindigmachen der Wegmarkierungen eine Liste mit Codes der Wegmarkierungen zu vergeben, welche die zu durchlaufende Strecke darstellen, und dass
- zur Prüfung, ob sich die Spieler entlang der zu durchlaufenden Strecke bewegen, der Speicher des Mikrocontrollers (42) einen Etappenzähler umfasst, der die Evolution des Spielers kontrolliert, indem er hochzählt, wenn der Code der Wegmarkierung (6) mit dem Code der Liste übereinstimmt, die der durch den Spieler erreichten Etappe entspricht, und der Mikrocontroller (42) eine Echtzeituhr umfasst, welche mit jener des Computer zur Steuerung der Partien synchronisiert werden kann, welche die verfügbare Zeit zum Durchlaufen der Strecke auf eine durch einen Betreiber programmierte Dauer einschränkt.

2. System nach Anspruch 1, **dadurch gekennzeichnet, dass** der Computer zur Steuerung der Partien durch eine Verbindung (68), die mit der mobilen Vorrichtung (2) hergestellt wird, imstande ist, die Liste mit Codes der Wegmarkierungen (6), welche die zu durchlaufende Strecke darstellen, vorzuwählen, die Dauer der Partie herunterzuladen, und die Echtzeituhr des Mikrocontrollers (42) der mobilen Vorrichtung (2) mit einem Zeitzähler zu synchronisieren, der jedem Spieler im Computer zur Steuerung der Partien gewidmet ist.

3. System nach Anspruch 1, **dadurch gekennzeichnet, dass** jede Wegmarkierung (6) und jede der mobilen Vorrichtungen (2) jeweils mit einem Sender und einem magnetischen Empfänger ausgerüstet sind, wobei jede der Wegmarkierungen (6) Mittel zum Senden eines codierten elektromagnetischen Signals (26, 29, 32, 35, 33, 34, 37, 38) umfasst, und jede mobile Vorrichtung (2) eines jeden Spielers ausgeführt ist, um ausschließlich (46, 47) das elektromagnetische Feld zu empfangen, das durch eine Wegmarkierung erzeugt wird, wenn sich der Spieler in unmittelbarer Nähe derselben befindet, und um das besagte Signal zu analysieren, um anzuzeigen, ob der Spieler innerhalb der gewährten Frist auf der richtigen Strecke ist.

4. System nach Anspruch 1, **dadurch gekennzeichnet, dass** jede Wegmarkierung (6) und jede der mobilen Vorrichtungen (2) jeweils mit Niederfrequenz-, Hochfrequenz-, Ultraschall- oder Infrarot-Sendern oder Empfängern ausgerüstet sein können.

5. System nach Anspruch 1, **dadurch gekennzeichnet, dass** es eine akustische Unterstützungsvorrichtung umfasst, die aus einem Schaltkreis zur Tonsynthesierung (62), einem Speicher (63), einem Verstärker (64), einem Potentiometer (65), einem Lautsprecher (66) gebildet wird, die ausgeführt ist, um Nachrichten und Geräusche für den Spieler auszustrahlen, welche ihm mitteilen, ob er sich auf dem richtigen oder falschen Weg befindet.

6. System nach Anspruch 1, **dadurch gekennzeichnet, dass** jede mobile Vorrichtung (2) einen Positionsänderungsdetektor (67) umfasst, der je nach Thema des Spiels aus der Gruppe mit den folgenden Detektoren ausgewählt wird: einem Kugeldetektor, einem Neigungsmesser, einem Beschleunigungsmesser, der ausgeführt ist, um die Positionsänderungen oder Stöße zu erkennen, die von der entsprechenden mobilen Vorrichtung (2) empfangen werden.

7. System nach Anspruch 1, **dadurch gekennzeichnet, dass** es einen Sender (18) umfasst, der sich auf dem Spielfeld befindet und jede mobile Vorrichtung (2) eine Trägerfrequenzintegrator-Detektorschaltung (54, 66, 56, 57, 58) umfasst, die mit Mitteln (42) verbunden ist, die imstande sind, einen Schwellenwert des Signals zu erkennen, das vom Sender (18) empfangen wird, und um den Spieler darüber zu informieren, dass er sich außerhalb des Spielfeldes befindet, und Mittel zum Unterbrechen der Partie, wenn der Spieler während einer vorbestimmten Dauer außerhalb des Spielfeldes verbleibt.

8. System nach Anspruch 6, **dadurch gekennzeichnet, dass**:
- die Wegmarkierungen (6) durch ein aussagekräftiges Mittel, wie die Ortstafel (20, 21, 22), das Wappen, ein Bauwerk, eine lokale Spezialität, jeweils eine bestimmte Stadt symbolisieren, und
- die mobilen Vorrichtungen die Form eines Fahrradrades (26) aufweisen, dessen elektronische Schaltung, die in der Nabe des Rades (27) enthalten ist, einen Beschleunigungsmesser (67) umfasst, der den Drehrhythmus des Rades, sowie jeden Sturz erkennt, sowie Mittel zum Bestrafen aller Spieler, die das Rad nicht bewegen oder es umfallen lassen, und
- Wege mit Schwierigkeiten, wie Anstiegen (24), Abfahrten, Straßenpflasterimitationen (23) versehen sind.

9. System nach Anspruch 8, **dadurch gekennzeichnet, dass** der Beschleunigungsmesser (67) und die Software des Mikrocontrollers (42) ausgeführt sind, um zu identifizieren, ob ein Spieler das Rad bewegt, durch Analyse charakteristischer Impulse für die Verwendung eines Stabes, die durch den Beschleunigungsmesser (67) erkannt werden, um das Rad laufen zu lassen, indem man die Oberseite des Rades stoßweise vorwärts reibt.

10. System nach einem der Ansprüche 1 bis 7, **dadurch gekennzeichnet, dass** es darüber hinaus Mittel umfasst, die ausgeführt sind, um virtuelle Lichtbahnen zu erzeugen, wobei diese Mittel Folgendes umfassen:
- einen Formprojektor oder LED-Diodenrampen oder Laser, die Leuchtzellen des Labyrinths am Boden oder im Raum eines Zimmers erzeugen
- zumindest einen digitalen Leistungsausgang, der mit dem Formprojektor oder mit den Rampen verbunden ist, mit denen der Mikrocontroller (26) einer jeden der Wegmarkierungen (6) ausgerüstet ist
- eine Infrarotverbindung, mit der der Mikrocontroller (26) einer jeden der Wegmarkierungen (6) und der Mikrocontroller (42) einer jeden der mobilen Vorrichtungen ausgerüstet sind, um miteinander zu kommunizieren,
wobei es die besagten Mittel und der Mikrocontroller (42) einer jeden der mobilen Vorrichtungen (2) erlauben, virtuelle Lichtbahnen zu erzeugen, die sich durch Einschalten und Ausschalten einer oder mehrerer Zellen durch die Bewegung des Spielers und je nach im Speicher des Mikrocontrollers (42) einer jeden der mobilen Vorrichtungen (2) gespeicherter Strecke verändern.

11. System nach einem der Ansprüche 5 bis 9, **dadurch gekennzeichnet, dass** es Mittel zum Kennenlernen der Wegmarkierung umfasst, welche der nächsten Etappe der zu durchlaufenden Strecke entspricht, wobei diese Mittel Folgendes umfassen:
- Zeichen (8) oder Volumina, die an jede der Wegmarkierungen (6) vergeben werden,
- einen Fragebogen, der im Speicher der akustischen Unterstützungsvorrichtung gespeichert ist,
- einen Umcodierungsraster, der dem Spieler zur Verfügung gestellt wird, welcher das Zeichen oder das Volumen der entsprechenden Wegmarkierung mit der nächsten Etappe der Strecke in Bezug setzt, und ein erster Buchstabe einer Antwort auf eine Frage aus dem Fragebogen.

## Claims

1. An interactive electronic maze system comprising:
- a play area formed of several possible paths to be travelled,
- a movable device (2) assigned to each player at the entrance of the play area,
**characterized in that**
- it further comprises emitter terminals (6) distributed over the play area, in particular at each intersection of the possible paths (5) and that
- it further comprises a part management computer capable of preselecting a code list of the terminals (6) which constitute the course to be performed,
- the movable device (2) is adapted to detect and identify a terminal (6) when the player is in the vicinity of the exclusion of any other terminal (6) located on the play area and that,
- this movable device (2) further comprises a microcontroller (42) and a serial link for assigning to each player in a differentiated manner in the memory of the microcontroller (42) a list of codes of the terminals which constitute the course to be performed by successive detections of the boundaries and that,
- in order to verify that players are walking down the course to be performed, the memory of the microcontroller (42) comprises a stage counter which controls the player's evolution by incrementing when the code of the terminal (6) is in agreement with the code of the list corresponding to the stage reached by the player and that the microcontroller (42) comprises a real-time clock synchronizable with that of the part management computer, which limits the time available for performing the course at a duration programmed by an operator.

2. The system according to claim 1, **characterized in that** the part management computer is able, by a link (68) established with the movable device (2), to preselect the list of the codes of the terminals (6) which constitute the course to be performed, to download the duration of a part and to synchronize the real-time clock of the microcontroller (42) of the movable device (2) with a time counter dedicated to each player in the part management computer.

3. The system according to claim 1, **characterized in that** each terminal (6) and each of the movable devices (2) are equipped, respectively, with an emitter and a magnetic receiver, each of the terminals (6) comprising means for emitting an encoded electromagnetic signal (26, 29, 32, 35, 33, 34, 37, 38) and each movable device (2) of each player being adapted to exclusively sense (46, 47) the electromagnetic field produced by a terminal when the player is located in the immediate vicinity thereof and to analyze said signal in order to indicate if the player is on the right course within the granted period.

4. The system according to claim 1, **characterized in that** each terminal (6) and each of the movable devices (2) may be equipped respectively with low frequency, high frequency, ultrasonic or infrared emitters and receivers.

5. The system according to claim 1, **characterized in that** it comprises a sound assistance device consisting of a sound synthesis circuit (62), a memory (63), an amplifier (64), a potentiometer (65), a loudspeaker (66) adapted to at least broadcast messages and sound effects to the player alerting him that he is on the right or wrong path.

6. The system according to claim 1, **characterized in that** each movable device (2) comprises a position change detector (67) selected from the group among the following detectors, depending on the theme of the game: a ball detector, a clinometer, or an accelerometer, adapted to detect the changes in positions or the shocks received by the corresponding movable device (2).

7. The system according to claim 1, **characterized in that** it further comprises an emitter (18) located on the play area and each movable device (2) comprises a carrier integrator detector circuit (54, 66, 56, 57, 58) connected to means (42) adapted to detect a threshold of the signal received from the emitter (18) and to warn the player that it is out of the play area and to means for interrupting the part if the player remains out of the play area for a predetermined duration.

8. A system according to claim 6, **characterized in that**:
- the terminals (6) symbolize each a particular town by an evocative means such as an entry panel (20, 21, 22), blazon, monument, local specialty and,
- the movable devices have the shape of a bicycle wheel (26), whose electronic circuit included in the hub of the wheel (27) comprises an accelerometer (67) which detects the rotation rhythm of the wheel, as well as any fall and means to penalize any player who does not make the wheel roll or who makes it fall and,
- paths embellished with difficulties such as climbs (24), descents, imitations of paving stones (23).

9. The system according to claim 8, **characterized in that** the accelerometer (67) and the software of the microcontroller (42) are adapted to identify if a player makes the wheel advance by analyzing pulses characteristic of the use of a strip in order to make the wheel roll by rubbing, forward, abruptly on the top of the wheel, detected by the accelerometer (67).

10. The system according to any of claims 1 to 7, **characterized in that** it further comprises means adapted to make virtual light paths, these means comprising:
- a shape projector or arrays of diodes LED or lasers which produce luminous cells of the maze on the ground or in the space of a room
- at least one digital power output connected to the shape projector or to the arrays, equipping the microcontroller (26) of each of the terminals (6)
- an infrared connection equipping the microcontroller (26) of each of the terminals (6) and the microcontroller (42) of each of the movable devices in order to communicate with each other,
said means and the microcontroller (42) of each of the movable devices (2) allowing making virtual light paths which evolve by ignition and extinction of one or several cell(s) with the displacement of the player and depending on the course recorded in the memory of the microcontroller (42) of each of the movable devices (2).

11. The system according to any of claims 5 to 9, **characterized in that** it comprises means for knowing the terminal which corresponds to the next step of the course to be performed, these means comprising:
- signs (8) or volumes attributed to each of the terminals (6),
- a questionnaire recorded in the memory of the sound assistance device,
- a transcoding grid provided to the player who matches the sign or the volume of the terminal corresponding to the next stage of the course and a first letter of a reply to a question of the questionnaire.
